# EUROPÄISCHE PATENTSCHRIFT

(11) **EP 2 917 629 B1**
(45) Veröffentlichungstag und Bekanntmachung des Hinweises auf die Patenterteilung: **19.10.2016**
(21) Anmeldenummer: 13817858.7
(22) Anmeldetag: 28.10.2013
(51) Int. Cl.: F16M 11/10, F16M 11/20

(54) **JUSTIERVORRICHTUNG FÜR EIN TRAGARMSYSTEM**
ADJUSTMENT DEVICE FOR A SUPPORT ARM SYSTEM
DISPOSITIF D'AJUSTEMENT POUR UN SYSTÈME À BRAS PORTEUR

(30) Priorität: 09.11.2012 DE 102012021914
(43) Veröffentlichungstag der Anmeldung: 16.09.2015
(73) Patentinhaber: Rolec Gehäuse-Systeme GmbH, 31737 Rinteln (DE)
(72) Erfinder: ROSE, Friedhelm, 32457 Porta Westfalica (DE)
(74) Vertreter: Bremer, Ulrich
(86) Internationale Anmeldenummer: PCT/DE2013/100372
(87) Internationale Veröffentlichungsnummer: WO 2014/071922

(56) Entgegenhaltungen:
- EP-B1- 1 041 335
- AT-B- 308 213
- DE-U1- 20 218 691
- FR-A1- 2 899 868

## Beschreibung

Die Erfindung betrifft eine Justiervorrichtung für ein Tragarmsystem zur Nivellierung eines Tragarmes gemäß dem Oberbegriff des Anspruchs 1.

Tragarmsysteme sind vorgesehen, um einen Gegenstand, z.B. ein Gehäuse, an einer Wand oder einem festen Element verschwenkbar zu befestigen. Das Tragarmsystem weist dabei mindestens ein Gelenk und einen daran fixierten Tragarm auf, wobei das Gelenk herkömmlicherweise als Wandgelenk, Aufsatzgelenk an einer Wandhalterung oder als Zwischengelenk zwischen zwei Tragarmen ausgeführt ist. Das Gehäuse ist in derartigen Systemen am Tragarm befestigt und kann somit je nach Ausführung des Gelenkes in seiner horizontalen und/oder vertikalen Lage verstellt werden.

Werden am Tragarm sehr schwere Gegenstände befestigt, so kann sich der zuvor horizontal ausgerichtete Tragarm durch die Belastung möglicherweise nach unten neigen. Der Tragarm muss somit neu ausgerichtet werden. Dazu sind an der Schnittstelle zwischen dem Gelenk und dem Tragarm herkömmlicherweise Justierschrauben angeordnet, mit denen die Neigung des Tragarms eingestellt und der Tragarm somit nivelliert werden kann.

Ein derartiges Tragarmsystem ist in der EP 1 041 335 B1 offenbart, bei dem der Tragarm mit Befestigungsschrauben an einem Gelenkteil des Gelenkes fixiert ist. Zusätzlich ist eine Justierschraube vorgesehen, die direkt auf eine gelenkseitige Stirnseite des Tragarmes oder auf das Gelenkteil wirkt, so dass bei Verstellung der Justierschraube die Neigung des Tragarmes verstellt wird.

Nachteilig bei dieser Lösung ist, dass die Justierschraube lediglich punktuell auf das Gelenk wirkt und dass das Material, auf das die Justierschraube einwirkt, durch eine Verdrehung der Schraube beeinträchtigt wird, so dass eine Abnutzung des Tragarmes auftreten kann. Weiterhin kann es durch die lediglich punktuelle Abstützung bei hohen Belastungen zu einem seitlichen Wegkippen des Tragarmes kommen.

Eine weitere derartige Justiervorrichtung für ein Tragarmsystem ist in der DE 10 2008 057 816 B3 vorgeschlagen. Dabei ist ein Tragarm an einem Gelenkteil befestigt, wobei zwischen dem Tragarm und dem Gelenkteil mindestens eine Justierschraube angeordnet ist, die in einem längs des Tragarms angeordneten Schraubkanal eingeschraubt ist. Weiterhin ist die Justierschraube mit ihrem Schraubenkopf an einem Stützabschnitt des Gelenkteils abgestützt, so dass bei Verdrehung der Justierschraube der Schraubenkopf gegen den Stützabschnitt drückt und somit die Stirnfläche des Tragarmes gegen die Stirnfläche des Gelenkteils verkippt wird und dadurch der Ausstellwinkel des Tragarmes eingestellt werden kann.

Nachteilig bei dieser Lösung ist, dass die Justierschrauben in einer Richtung längs zum Tragarm angeordnet sind, so dass eine Verstellung der Justierschrauben z.B. bei einem Wandgelenk aus Platzgründen nur sehr umständlich möglich ist, da die Justierschrauben zur Wand hin zeigen.

Es ist daher Aufgabe der Erfindung eine Justiervorrichtung für ein Tragarmsystem zu schaffen, die eine sichere, zuverlässige und einfache Nivellierung eines Tragarmes erlaubt.

Diese Aufgabe wird durch eine Justiervorrichtung für ein Tragarmsystem gemäß Anspruch 1 gelöst. Vorteilhafte und zweckmäßige Weiterbildungen werden in den Unteransprüchen beschrieben.

Erfindungsgemäß ist somit eine Justiervorrichtung für ein Tragarmsystem zur Nivellierung eines Tragarmes vorgesehen, wobei die Justiervorrichtung einen keilförmigen Justierkopf aufweist, der auf den Tragarm und ein Gelenkteil einwirkt. Das Gelenkteil ist dabei drehbar an einer Gelenkhalterung, z.B. einer Wandhalterung, gelagert, die zusammen ein Gelenk ausbilden, wobei das Gelenk vorzugsweise als ein Wandgelenk oder ein Aufsatzgelenk oder ein Zwischengelenk ausgeführt ist.

Der Tragarm und der Justierkopf sind dabei so am Gelenkteil angeordnet, dass der Justierkopf zwischen einer Stirnfläche des Tragarmes und einer Gleitschräge des Gelenkteils liegt, wobei erfindungsgemäß eine Keilfläche des Justierkopfes auf die Gleitschräge und eine der Keilfläche gegenüberliegende ballige Druckfläche des Justierkopfes auf einen unteren Bereich der Stirnfläche einwirkt. Der Justierkopf ist dabei verstellbar, wobei je nach vertikaler Position des Justierkopfes die Keilfläche so entlang der Gleitschräge gleitet, dass die Druckfläche des Justierkopfes den unteren Bereich der Stirnfläche des Tragarmes von dem Gelenkteil wegdrückt:

Ein oberer Bereich der Stirnfläche des Tragarmes liegt dabei weiterhin am Gelenkteil an, so dass dort ein Drehpunkt ausgebildet wird, um den der Tragarm durch das Wegdrücken des unteren Bereiches verschwenkt. Dadurch kann erfindungsgemäß ein Ausstellwinkel des Tragarmes eingestellt werden, so dass der Tragarm unter Belastung nivelliert werden kann, indem der Justierkopf entsprechend vertikal verstellt wird. Fixiert ist der Tragarm in dieser nivellierten Stellung vorzugsweise durch Befestigungsschrauben.

Der untere Bereich, in dem der Justierkopf gegen die Stirnfläche des Tragarmes drückt, deckt dabei vorzugsweise mindestens ein Drittel der Breite des Tragarmes ab. Das hat den Vorteil, dass der Justierkopf nicht nur punktuell, sondern auf einem größeren Bereich auf den Tragarm einwirkt, so dass sich das Gewicht bei Belastung auf einen größeren Bereich verteilt.

Vorzugsweise ist der Justierkopf weiterhin durch eine Justierschraube verstellbar, die in einem Schraubkanal am Gelenkteil eingeschraubt ist. Der Schraubenkanal verläuft dabei in vertikaler Richtung. Die Justierschraube ist somit ebenfalls in vertikaler Richtung verstellbar und schiebt den Justierkopf vertikal nach oben.

Daraus ergibt sich der Vorteil, dass der Ausstellwinkel aus einer vorteilhaften Arbeitsposition heraus von einem Monteur verstellt werden kann und die Justierschraube somit z.B. bei einer Wandhalterung ohne großen Aufwand mit einem Werkzeug zu betätigen ist. Die Befestigungsschrauben liegen außerdem nicht im Betätigungsbereich der Justierschraube, so dass eine Verstellung der beiden Schrauben erleichtert wird.

Die Erfindung wird nachfolgend anhand eines Ausführungsbeispiels und dazugehöriger Zeichnungen näher erläutert. Es zeigen:
- Fig. 1: eine Schnittansicht eines Tragarmsystems mit einer Justiervorrichtung,
- Fig. 2: eine Detailansicht (E) der Justiervorrichtung gemäß Fig. 1 in einem vergrößerten Maßstab, und
- Fig. 3a, b, c: Seitenansichten eines Justierkopfes und einer Justierschraube gemäß Figur 1.

Die dargestellte Ausführungsform betrifft ein Tragarmsystem 1 mit einer Justiervorrichtung 2, wobei das Tragarmsystem 1 einen Tragarm 3, an dem herkömmlicherweise ein Gegenstand, z.B. ein Gehäuse, befestigt ist, ein Gelenkteil 4 mit einer Aufnahme 4.1 und eine als Wandhalterung ausgeführte Gelenkhalterung 6 aufweist. Am Gelenkteil 4 und an der Wandhalterung 6 sind weiterhin Abdeckungen 5 zum Schutz vor äußeren Einflüssen angeordnet, wobei die Abdeckungen 5 mit Schrauben 5.1 befestigt sind.

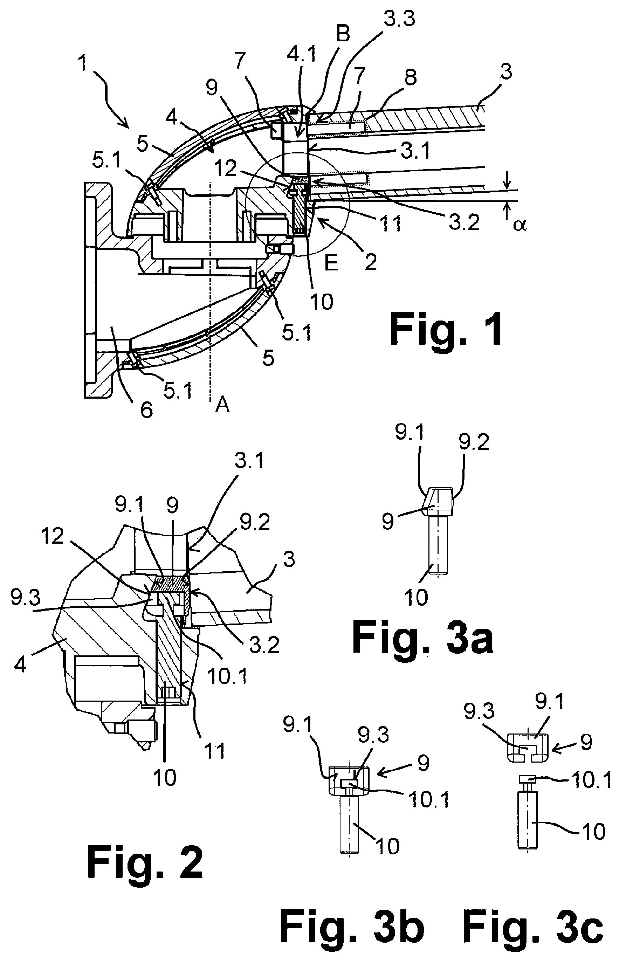

Wie in Fig. 1 zu sehen, ist das Gelenkteil 4 an der Wandhalterung 6 gelagert, so dass das Gelenkteil 4 um die Gelenkachse A verdrehbar ist und somit ein Wandgelenk ausgebildet wird. Im Folgenden wird das Tragarmsystem 1 leidglich mit einem Wandgelenk beschrieben. Die Erfindung ist dabei aber nicht auf ein Wandgelenk beschränkt und sie kann in einfacher Weise auch mit einem Zwischengelenk oder einem Aufsatzgelenk umgesetzt werden.

Der Tragarm 3 ist durch Befestigungsschrauben 7 an der Aufnahme 4.1 des Gelenkteils 4 fixiert. Die Befestigungsschrauben 7 sind dabei durch die Aufnahme 4.1 geführt und in längs im Tragarm 3 verlaufende Schraubkanäle 8 eingeschraubt. Dadurch ist der Tragarm 3 fest mit dem Gelenkteil 4 verbunden und mit diesem um die Gelenkachse A in einer horizontalen Ebene verdrehbar.

Am Gelenkteil 4 ist gemäß Fig. 1 und der Detailansicht gemäß Fig. 2 weiterhin ein Justierkopf 9 und eine Justierschraube 10 angeordnet, wobei die Justierschraube 10 in einen vertikal verlaufenden Schraubkanal 11 des Gelenkteils 4 eingeschraubt ist. Die Justierschraube 10 kann dabei z.B. als Inbus-Schraube ausgeführt sein, die von unten durch einen Inbus-Schlüssel betätigt wird. Der Justierkopf 9 weist eine Keilfläche 9.1 und eine der Keilfläche 9.1 gegenüberliegende ballige Druckfläche 9.2 auf, wobei die Keilfläche 9.1 an einer Gleitschräge 12 des Gelenkteils 4 und die Druckfläche 9.2 an einem unteren Bereich 3.2 einer Stirnfläche 3.1 des Tragarmes 3 anliegt.

Der Justierkopf 9 bewirkt dabei, dass zwischen dem unteren Bereich 3.2 der Stirnfläche 3.1 des Tragarmes 3 und dem Gelenkteil 4 ein Abstand einstellbar ist, wobei der obere Bereich 3.3 der Stirnfläche 3.1 weiterhin das Gelenkteil 4 berührt und somit ein Drehpunkt B ausgebildet wird. Wird der Justierkopf 9 durch Verdrehung der Justierschraube 10 vertikal nach oben verschoben, so gleitet der Justierkopf 9 entlang der Gleitschräge 12 und wirkt somit auch in Richtung des Tragarmes 3. Dadurch wird die Druckfläche 9.2 gegen die Stirnfläche 3.1 des Tragarmes 3 gedrückt und der Tragarm 3 verdreht sich um den Drehpunkt B und ein Ausstellwinkel α wird eingestellt. Je weiter der Justierkopf 9 nach oben verschoben wird, desto weiter wird der Tragarm 3 somit um den Drehpunkt B verstellt. Der belastete Tragarm 3 kann also nivelliert werden, indem die Justierschraube 10 entsprechend verdreht wird.

Zur Führung des Justierkopfes 9 auf der Justierschraube 10 ist ein Schraubenkopf 10.1 der Justierschraube 10 in einem Kanal 9.3 des Justierkopfes 9 verschiebbar aufgenommen, wie in den Figuren 2 und 3c dargestellt ist. Der Kanal 9.3 verläuft dabei in Richtung der Stirnfläche 3.1 des Tragarmes 3, so dass sich der Justierkopf 9 je nach Verstellung der Justierschraube 10 entlang des Kanals 9.3 entweder zum Tragarm 3 hin oder vom Tragarm 3 weg verschieben kann.

Weiterhin wird durch den Kanal 9.3 der Justierkopf 9, z.B. bei Abnahme oder Montage des Tragarmes 3, am Gelenkteil 4 gehalten und kann somit nicht abfallen. Außerdem kann der Justierkopf 9 beim Zusammenbau des Tragarmsystems 1 einfach auf den Schraubenkopf 10.1 der bereits in den Schraubkanal 11 im Gelenkteil 4 eingeschraubten Justierschraube 10 aufgeschoben werden, wodurch der Montageaufwand gering gehalten wird.

Bei der Montage des Tragarmsystems 1 wird somit zunächst der Tragarm 3 in die Aufnahme 4.1 des Gelenkteils 4 eingesetzt. Dann werden die Befestigungsschrauben 7 im unteren Bereich 3.2 und im oberen Bereich 3.3 in die dafür vorgesehenen Schraubkanäle 8 des Tragarms 3 eingeschraubt und fest angezogen, so dass der Tragarm 3 sicher am Gelenkteil 4 befestigt ist. Danach wird der Gegenstand, z.B. ein Gehäuse, am Ende des Tragarms 3 befestigt. Neigt sich der Tragarm 3 durch die Belastung leicht nach unten, so werden die Befestigungsschrauben 7 im oberen Bereich 3.3 nur geringfügig und die Befestigungsschrauben 7 im unteren Bereich 3.2 soweit gelöst, dass ein Abdrücken des unteren Bereichs 3.2 der Stirnfläche 3.1 des Tragarms 3 vom Gelenkteil 4 möglich ist. Nun wird die Justierschraube 10 so lange im Schraubkanal 11 verdreht, bis der gewünschte Ausstellwinkel α des Tragarmes 3 eingestellt ist. Anschließend werden alle Befestigungsschrauben 7 fest angezogen, so dass der Tragarm 3 mit dem entsprechend eingestellten Ausstellwinkel α fixiert ist und somit vorzugsweise horizontal ausgerichtet ist. Für eine erneute Nivellierung wird entsprechend vorgegangen.

## Patentansprüche

1. Justiervorrichtung (2) und ein Tragarmsystem (1), wobei das Tragarmsystem (1) mindestens aufweist:
einen Tragarm (3) zum Halten eines Gegenstandes, und
ein Gelenkteil (4) mit einer Aufnahme (4.1) zur Befestigung des Tragarmes (3),
wobei das Gelenkteil (4) drehbar an einer Gelenkhalterung (6) gelagert ist, und
wobei der Tragarm (3) mit einer Stirnfläche (3.1) am Gelenkteil (4) fixierbar ist und ein Ausstellwinkel (α) des Tragarmes (3) durch die Justiervorrichtung (2) einstellbar ist,
**dadurch gekennzeichnet, dass**
die Justiervorrichtung (2) durch einen keilförmigen Justierkopf (9), der mit einer Gleitschräge (12) des Gelenkteiles (4) und der Stirnfläche (3.1) des Tragarmes (3) zusammenwirkt, gebildet ist,
wobei der Justierkopf eine Keilfläche (9.1) sowie eine der Keilfläche (9.1) gegenüberliegende Druckfläche (9.2) aufweist,
und wobei der Justierkopf (9) so verstellbar ist, dass die Keilfläche (9.1) an der Gleitschräge (12) entlang gleitet und die Druckfläche (9.2) dadurch gegen die Stirnfläche (3.1) des Tragarmes (3) drückt und somit der Ausstellwinkel (α) des Tragarmes (3) einstellbar ist.

2. Justiervorrichtung (2) nach Anspruch 1, **dadurch gekennzeichnet, dass** der Justierkopf (9) durch eine Justierschraube (10) verstellbar ist.

3. Justiervorrichtung (2) nach Anspruch 2, **dadurch gekennzeichnet, dass** die Justierschraube (10) in einem Schraubkanal (11), der vertikal im Gelenkteil (4) verläuft, angeordnet ist.

4. Justiervorrichtung (2) nach Anspruch 1 oder 2, **dadurch gekennzeichnet, dass** ein Schraubenkopf (10.1) der Justierschraube (10) in einem Kanal (9.3) am Justierkopf (9) angeordnet ist zum Führen des Justierkopfes (9) auf der Justierschraube (10).

5. Justiervorrichtung (2) nach einem der vorherigen Ansprüche, **dadurch gekennzeichnet, dass** die Druckfläche (9.2) ballig ausgeführt ist.

6. Justiervorrichtung (2) nach einem der vorherigen Ansprüche, **dadurch gekennzeichnet, dass** der Tragarm (3) durch Befestigungsschrauben (7) am Gelenkteil (4) befestigt ist, zur Feststellung des Ausstellwinkels (α).

7. Justiervorrichtung (2) nach einem der vorhergehenden Ansprüche, **dadurch gekennzeichnet, dass** das Gelenkteil (4) Teil eines Wandgelenkes oder einem Aufsatzgelenkes oder eines Zwischengelenkes ist.

## Claims

1. Adjusting device (2) and
a support arm system (1), wherein the support arm system (1) comprises at least:
a support arm (3) for holding an object, and
a joint part (4) with a receptacle (4.1) for fastening the support arm (3),
wherein the joint part (4) is rotatably mounted on an articulated bracket (6), and
wherein the support arm (3) can be fixed at the joint part (4) with an end face (3.1) and a projection angle (α) of the support arm (3) can be adjusted by means of the adjusting device (2),
**characterised in that**
the adjusting device (2) consists of a tapered adjusting head (9) which works in conjunction with a sliding bevel (12) of the joint part (4) and the end face (3.1) of the support arm (3), wherein the adjusting head comprises a tapered surface (9.1) and a contact surface (9.2) opposite the tapered surface (9.1),
and wherein the adjusting head (9) is adjustable in such a way that the tapered surface (9.1) slides along the sliding bevel (12) and thereby presses the contact surface (9.2) against the end face (3.1) of the support arm (3) so that the projection angle (α) of the support arm (3) is adjustable.

2. Adjusting device (2) according claim 1, **characterised in that** the adjusting head (9) can be adjusted by means of an adjusting screw (10).

3. Adjusting device (2) according to claim 2, **characterised in that** the adjusting screw (10) is arranged in a screw channel (11) running vertically in the joint part (4).

4. Adjusting device (2) according to claim 1 or 2, **characterised in that** a screw head (10.1) of the adjusting screw (10) is arranged in a channel (9.3) at the adjusting head (9) so as to guide the adjusting head (9) on the adjusting screw (10).

5. Adjusting device (2) according to any one of the preceding claims, **characterised in that** the contact surface (9.2) is crowned.

6. Adjusting device (2) according to any one of the preceding claims, **characterised in that** the support arm (3) is fastened to the joint part (4) by means of fastening screws (7) in order to fix the projection angle (α).

7. Adjusting device (2) according to any one of the preceding claims, **characterised in that** the joint part (4) is part of an articulated wall bracket or a supporting joint or an intermediate joint.

## Revendications

1. Dispositif d'ajustage (2) et
un système de bras de support (1), le système de bras de support (1) présentant au moins :
un bras de support (3) pour supporter un objet, et
une pièce d'articulation (4) avec une réception (4.1) pour fixer le bras de support (3),
la pièce d'articulation (4) étant montée rotative sur un support d'articulation (6), et
le bras de support (3) pouvant être fixé avec une face d'extrémité (3.1) sur la pièce d'articulation (4) et un angle de sortie (α) du bras de support (3) pouvant être réglé par le dispositif d'ajustage (2),
**caractérisé en ce que**
le dispositif d'ajustage (2) est constitué par une tête d'ajustage cunéiforme (9) qui concourt avec une pente de coulissement (12) de la pièce d'articulation (4) et la face d'extrémité (3.1) du bras de support (3),
la tête d'ajustage présentant une surface cunéiforme (9.1), ainsi qu'une surface de pression (9.2) opposée à la surface cunéiforme (9.1),
et la tête d'ajustage (9) étant réglable de façon que la surface cunéiforme (9.1) coulisse le long de la pente de coulissement (12) en pressant la surface de pression (9.2) contre la face d'extrémité (3.1) du bras de support (3), ce qui rend réglable l'angle de sortie (α) du bras de support (3).

2. Dispositif d'ajustage (2) suivant la revendication 1, **caractérisé en ce que** la tête d'ajustage (9) est réglable par une vis d'ajustage (10).

3. Dispositif d'ajustage (2) suivant la revendication 2, **caractérisé en ce que** la vis d'ajustage (10) est disposée dans un canal de vissage (11) qui s'étend verticalement dans la pièce d'articulation (4).

4. Dispositif d'ajustage (2) suivant la revendication 1 ou 2, **caractérisé en ce qu**'une tête de vis (10.1) de la vis d'ajustage (10) est disposée dans un canal (9.3) dans la tête d'ajustage (9) pour guider celle-ci sur la vis d'ajustage (10).

5. Dispositif d'ajustage (2) suivant une des revendications précédentes, **caractérisé en ce que** la surface de pression (9.2) est conçue bombée.

6. Dispositif d'ajustage (2) suivant une des revendications précédentes, **caractérisé en ce que** le bras de support (3) est fixé par des vis de fixation (7) sur la pièce d'articulation (4) pour bloquer l'angle de sortie (α).

7. Dispositif d'ajustage (2) suivant une des revendications précédentes, **caractérisé en ce que** la pièce d'articulation (4) fait partie d'une articulation murale ou d'une articulation rapportée ou d'une articulation intermédiaire.
